# EUROPÄISCHE PATENTANMELDUNG

(11) **EP 0 655 227 A2**
(43) Veröffentlichungstag der Anmeldung: **31.05.1995**
(21) Anmeldenummer: 94116610.0
(22) Anmeldetag: 21.10.1994
(51) Int. Cl.: A61C 13/00, A61C 13/265

(54) **Verfahren zur Herstellung von Zahnersatzteilen**

(30) Priorität: 26.10.1993 DE 4336397
(71) Anmelder: Rübeling, Günter, D-27607 Langen (DE)
(72) Erfinder:
(74) Vertreter: Eisenführ, Speiser & Partner

(57) **Zusammenfassung**

Die Erfindung betrifft ein Verfahren zur Herstellung von Zahnersatzteilen, wie z.B. Kronen, Brücken, Teil- oder Vollprothesen, mit mindestens einem metallischen Primärteil (10) und einem daran lösbar befestigten, ebenfalls aus Metall gefertigten Sekundärteil (20), wobei Primärteil (10) und Sekundärteil (20) zur Verbindung miteinander ineinander passende Verbindungselemente (12, 24) mindestens eines Geschiebes aufweisen, die in einem definierten Abstand voneinander angeordnet sind, so daß zwischen den Führungsflächen (18, 28) der Verbindungselemente (12, 24) ein definierter Zwischenraum (30) gebildet wird, in den ein Friktionselement (32) eingepaßt wird. Das Besondere der Erfindung besteht darin, daß bei der Herstellung von Primärteil (10) und Sekundärteil (20) die Verbindungselemente (12, 24) des Geschiebes zunächst derart vorbearbeitet werden, daß ein Zusammensetzen von Primärteil (10) und Sekundärteil (20) im allgemeinen nur ohne Anordnung des Friktionselementes möglich ist, und anschließend bei lagerichtiger Anordnung des Sekundärteils (20) am Primärteil (10) die Führungsflächen (18, 28) der Verbindungselemente (12, 24) zur Ausbildung des definierten Zwischenraumes (30) gemeinsam in einem Arbeitsgang durch Funkenerosion mittels einer Elektrode nachbearbeitet werden, die in ihren Abmessungen im wesentlichen dem Friktionselement (32) entspricht.

## Beschreibung

Die Erfindung betrifft ein Verfahren zur Herstellung von Zahnersatzteilen, wie z.B. Kronen, Brücken, Teil- oder Vollprothesen, mit mindestens einem metallischen Primärteil und einem daran lösbar befestigten, ebenfalls aus Metall gefertigten Sekundärteil, wobei Primärteil und Sekundärteil zur Verbindung miteinander ineinander passende Verbindungselemente mindestens eines Geschiebes aufweisen, die in einem definierten Abstand voneinander angeordnet sind, so daß zwischen Führungsflächen der Verbindungselemente ein definierter Zwischenraum gebildet wird, in den ein Friktionselement eingepaßt wird.

Bei einem solchen Verfahren kommt es entscheidend darauf an, daß die Verbindungselemente des Geschiebes mit ihren Führungsflächen lagerichtig zueinander und paßgenau ausgearbeitet werden, damit für das Friktionselement eine ausreichende Reibung zwischen den Führungsflächen gewährleistet ist und sich das Sekundärteil nicht unbeabsichtigt vom Primärteil löst. Die Qualität derartiger zahntechnischer Arbeiten hängt also entscheidend von der Form- und Lagegenauigkeit der Führungsflächen ab.

Im zahntechnischen Labor wurden bisher die Verbindungselemente am Primärteil und am Sekundärteil beim Gießen des Teils geformt und/oder gefräst. Aufgrund unvermeidlicher Toleranzen konnte dabei jedoch im wesentlichen nicht gewährleistet werden, daß nach Anbringung des Zahnersatzteiles am Gebiß die Führungsflächen der Verbindungselemente später noch genau zueinander ausgerichtet waren und ihre gewünschte Lage einnahmen. In den meisten Fällen war daher eine zeitraubende Nacharbeit erforderlich, damit die erforderliche Ausrichtung und Anordnung der Führungsflächen mit der gewünschten Präzision erreicht werden konnte.

Der Erfindung liegt daher die Aufgabe zugrunde, das Verfahren der eingangs genannten Art derart zu verbessern, daß es einen geringen Zeitaufwand erfordert und damit kostengünstig ist, jedoch zugleich die geforderte Präzision gewährleistet und ohne Probleme in einem zahntechnischen Labor angewendet werden kann.

Diese Aufgabe wird bei einem Verfahren der eingangs genannten Art dadurch gelöst, daß bei der Herstellung von Primärteil und Sekundärteil die Verbindungselemente des Geschiebes zunächst derart vorbearbeitet werden, daß eine Zusammensetzen von Primärteil und das Sekundärteil im allgemeinen nur ohne Anordnung des Friktionselementes möglich ist, und anschließend bei lagerichtiger Anordnung des Sekundärteils am Primärteil die Führungsflächen der Verbindungselemente zur Ausbildung des definierten Zwischenraumes gemeinsam in einem Arbeitsgang durch Funkenerosion mittels einer Elektrode nachbearbeitet werden, die in ihren Abmessungen im wesentlichen dem Friktionselement entspricht.

Der wesentliche Gedanke der Erfindung beruht also darin, in einem ersten Schritt während der Herstellung von Primärteil und Sekundärteil das Geschiebe grob auszubilden, und zwar soweit, daß mit Hilfe der Verbindungselemente Primärteil und Sekundärteil ohne Friktionselement bereits zusammengesetzt werden können, bevor in einem zweiten Schritt, bei welchem das Sekundärteil am Primärteil lagerichtig angeordnet ist, die Führungsflächen des Geschiebes durch eine Nachbearbeitung mittels Funkenerosion ihr endgültiges Finnish sowie ihre gewünschte Ausrichtung und Anordnung erhalten.

Durch die grobe Ausbildung der Verbindungselemente des Geschiebes im ersten Schritt ist es also bereits möglich, zum Zwecke der Anpassung des Zahnersatzteils am Gebißmodell das Primärteil und das Sekundärteil - zumindest provisorisch - miteinander verbinden zu können. Allerdings werden die Verbindungselemente nur so vorbearbeitet, daß bei lagerichtiger Anordnung des Sekundärteils am Primärteil der Abstand zwischen den Führungsflächen im allgemeinen geringer als ein definierter Soll-Abstand ist, auf keinen Fall jedoch größer als dieser sein darf. Dies hat zur Folge, daß Primärteil und Sekundärteil im allgemeinen nur ohne Anordnung des Friktionselementes zusammengesetzt werden können, da der Zwischenraum zur Aufnahme des Friktionselementes die geforderten Abmessungen im allgemeinen noch nicht aufweist; gleichwohl ist allerdings dadurch bereits so viel Toleranz innerhalb des Geschiebes gegeben, daß eine Lagejustierung des Sekundärteils am Primärteil durch leichtes Verschieben dieser Teile gegeneinander möglich ist. Auf diese Weise kann für jedes Gebiß individuell die lagerichtige Anordnung von Primärteil und Sekundärteil am Gebiß sowie aneinander festgelegt werden.

Erst wenn die lagerichtige Anordnung des Sekundärteils am Primärteil für das individuelle Gebiß bestimmt worden ist, werden erfindungsgemäß die Führungsflächen des Geschiebes zur Ausbildung des definierten Zwischenraumes für die Aufnahme des Friktionselementes fertigbearbeitet. Erst durch diese Fertig- bzw. Nachbearbeitung oder "Finishing" erhalten die Führungsflächen des Geschiebes ihre gewünschte exakte und spannungsfreie Ausrichtung und lagerichtige Position gemäß der Situation im Mund, wodurch nun der definierte Abstand zwischen den Führungsflächen am Primärteil und Sekundärteil hergestellt und somit der definierte Zwischenraum gebildet wird, in den dann das Friktionselement eingepaßt werden kann. Die Fertigbearbeitung der Führungsflächen wird erfindungsgemäß mittels Funkenerosion durchgeführt, wobei die Abmessungen der verwendeten Elektrode im wesentlichen den Abmessungen des anschließend einzusetzenden Friktionselementes entsprechen. Allerdings versteht sich von selbst, daß die Abmessungen der Elektrode im Hinblick auf den Funkenspalt geringfügig kleiner als die Abmessungen des Friktionselementes sein müssen. Mit Hilfe der Elektrode wird also der Zwischenraum zwischen den Führungsflächen der Verbindungselemente in seinen gewünschten, definierten Abmessungen erodiert, um anschließend das Friktionselement in einer Weise aufnehmen zu können, daß ausreichend Friktion zwischen den Führungsflächen des Geschiebes für eine sichere Fixierung des Sekundärteils am Primärteils auftritt.

Zwar ist bei dem erfindungsgemäßen Verfahren eine Nachbearbeitung des Geschiebes erforderlich, jedoch hat diese erfindungsgemäße Maßnahme den Vorteil, daß das Geschiebe dann präzise auf den individuellen Anwendungsfall ausgebildet werden kann, ohne daß später eine Verschlechterung des Paßsitzes des Sekundärteils am Primärteil zu befürchten ist. Dabei wird die Fertigbearbeitung des Geschiebes durch die erfindungsgemäße Verwendung des Funkenerosionsverfahrens auf besonders einfache und unkomplizierte Weise durchgeführt. Das Funkenerosionsverfahren bietet nämlich eine Reihe gravierender Vorteile. Die Form der Führungsflächen der Verbindungselemente und somit des zwischen diesen zu bildenden, definierten Zwischenraums und damit auch des in diesen einzusetzenden Friktionselementes ist durch entsprechende Formgebung der Elektrode frei wählbar. Die Bearbeitung erfolgt schonend und ohne Druck auf das zu bearbeitende Teil, so daß eine Verformung der meist dünnen Seitenwände der bearbeiteten Teile nicht zu befürchten ist. Die Führungsflächen können ohne Schwierigkeiten auch in harte metallische Werkstoffe wie z.B. Edelmetalle, Nichtedelmetalle und insbesondere Titan eingearbeitet werden.

Es läßt sich also daher festhalten, daß mit Hilfe des erfindungsgemäßen Verfahrens eine individuelle und zugleich paßgenaue und spannungsfreie Herstellung eines Geschiebes auf einfache und somit kostengünstige Weise realisiert wird.

Im allgemeinen wird die Elektrode in Schieberichtung des Geschiebes zwischen dessen Verbindungselemente getrieben.

Vorzugszweise wird mit einer ersten Fläche der Elektrode die Führungsfläche des einen Verbindungselementes am Primärteil und mit einer zweiten Fläche der Elektrode die Führungsfläche des anderen Verbindungselementes am Sekundärteil gleichzeitig nachbearbeitet.

Gewöhnlich wird die Führungsfläche des einen Verbindungselementes mit einer konvexen Form und die Führungsfläche des anderen Verbindungselementes mit einer entsprechenden konkaven Form ausgebildet.

Besonders bevorzugt ist ein Verfahren, bei welchem zur Ausbildung des Geschiebes eine Aussparung und ein in die Aussparung passender Ansatz vorgesehen wird, so daß die Führungsflächen von der Innenfläche der Aussparung und der Außenfläche des Ansatzes gebildet werden. Bei einem solchen Verfahren wird erfindungsgemäß bei lagerichtiger Anordnung des Sekundärteils am Primärteil zwischen die Aussparung und den in dieser sitzenden Ansatz die Elektrode derart vorgetrieben, daß mit einer ersten Fläche der Elektrode die Außenfläche des Ansatzes und mit einer zweiten Fläche der Elektrode die Innenfläche der Aussparung gleichzeitig nachbearbeitet wird. Vorzugsweise weist der Ansatz einen teil- oder vollzylindrischen Abschnitt auf und wird das Friktionselement als offene oder geschlossene Hülse ausgebildet, wobei bei einer vorteilhaften Weiterbildung der Ansatz als an einem Steg seitlich sitzender Zylinder und das Friktionselement als Schlitzhülse ausgebildet wird.

Gewöhnlich werden Zahnersatzteile mit mindestens zwei Geschieben zur Verbindung von Primärteil und Sekundärteil hergestellt, wobei dann die Ansätze und Aussparungen der Geschiebe parallel zueinander verlaufend ausgearbeitet werden müssen, da ansonsten Passungsprobleme auftreten. Gerade die gleichzeitige Fertigbearbeitung von parallelen Geschieben in der gewünschten Präzision läßt sich mit Hilfe der Erfindung auf einfache Weise erreichen, indem die Elektroden lediglich parallel zueinander angeordnet und bewegt werden müssen.

Da Kunststoffe mit hohen Reibungskoeffizienten erhältlich sind, empfiehlt es sich, das Friktionselement aus einem solchen Kunststoff herzustellen.

Nachfolgend werden bevorzugte Ausführungsbeispiele der Erfindung anhand der beiliegenden Zeichnungen näher erläutert. Die schematischen Zeichnungen sollen nur das Wesentliche zum Ausdruck bringen und sind nicht in allen Einzelheiten maßstabsgerecht ausgeführt. Es zeigen:
- Figur 1: eine perspektivische Ansicht eines Primärteils mit einem daran angesetzten Stabteil und einem auf dem zylindrischen Abschnitt des Stabteils sitzenden Friktionselement als Teil eines Geschiebes einer ersten Ausführung;
- Figur 2: eine perspektivische Einzeldarstellung des Stabteils der ersten Ausführung;
- Figur 3: eine perspektivische Einzeldarstellung des Friktionselementes der ersten Ausführung;
- Figur 4: eine perspektivische Darstellung einer zur Nachbearbeitung eines Geschiebes der ersten Ausführung verwendeten Funkenerosionselektrode;
- Figur 5: eine perspektivische Darstellung des Primärteils und eines mit diesem mittels des Geschiebes verbundenen Sekundärteils ohne eingesetztes Friktionselement, wobei Einzelheiten des Geschiebes der ersten Ausführung sichtbar sind;
- Figur 6: eine vergrößerte Einzeldarstellung des Geschiebes der ersten Ausführung ohne eingesetztes Friktionselement bei mit dem Primärteil verbundenem, im Querschnitt gezeigtem Sekundärteil;
- Figur 7: die gleiche Darstellung wie Figur 6, jedoch mit vom Sekundärteil gelöstem Primärteil;
- Figur 8: die gleiche Darstellung wie Figur 7; jedoch mit in der Geschiebeaussparung im Sekundärteil eingesetztem Friktionselement;
- Figur 9: eine perspektivische Ansicht eines Stabteils eines Geschiebes in einer zweiten Ausführung;
- Figur 10: in perspektivischer Ansicht ein zum Stabteil von Figur 9 passendes Rohrstück;
- Figur 11: ein zum Geschiebe gemäß der Figuren 9 und 10 passendes Friktionselement;
- Figur 12: das Rohrstück von Figur 10 mit daran angesetzten Verbindungsarmen, wobei in eine Aussparung des Rohrstückes das Stabteil von Figur 9 eingesetzt ist;
- Figur 13: eine perspektivische Darstellung der zur Nachbearbeitung des Geschiebes der zweiten Ausführung verwendeten Funkenerosionselektrode;
- Figur 14: die gleiche Anordnung wie Figur 12, jedoch nach Bearbeitung durch die Funkenerosionselektrode von Figur 13; und
- Figur 15: die gleiche Anordnung wie Figur 14, jedoch mit in den Spalt zwischen Stabteil und Rohrstück eingesetztem Friktionselement von Figur 11.

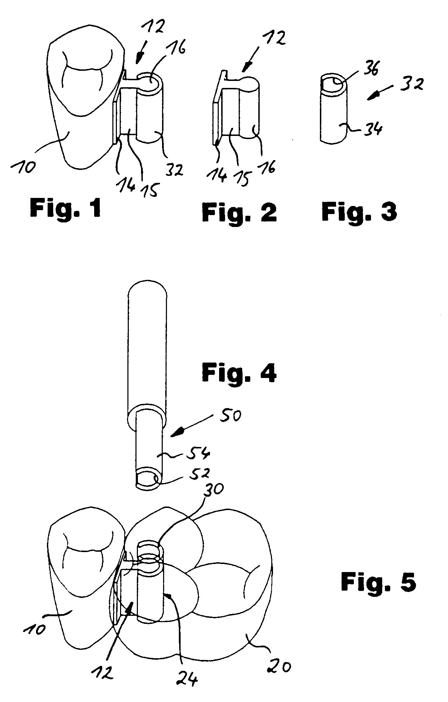

Zunächst wird anhand der Figuren 1 bis 8 ein Verfahren zur Herstellung von mittels einer ersten Ausführung eines Geschiebes verbindbaren Zahnersatzteilen beschrieben, welche ein Primärteil 10, bei dem es sich vorzugsweise um eine aus Metall gefertigte Krone handeln kann, und ein Sekundärteil 20 umfassen.

Am Primärteil 10 ist in der dargestellten Ausführung ein Stabteil 12 anmodelliert, welches das eine Verbindungselement des Geschiebes bildet. Das Stabteil 12 weist einen rechteckigen, plattenförmigen Fuß 14 auf, mit dem es am Primärteil 10 befestigt ist. Vom Fuß 14 erhebt sich ein Steg 15, auf dem wiederum ein teilzylindrischer Abschnitt 16 mit seiner Längsseite angeordnet ist. Der Durchmesser des teilzylindrischen Abschnittes 16 ist größer als die Dicke des Steges 15.

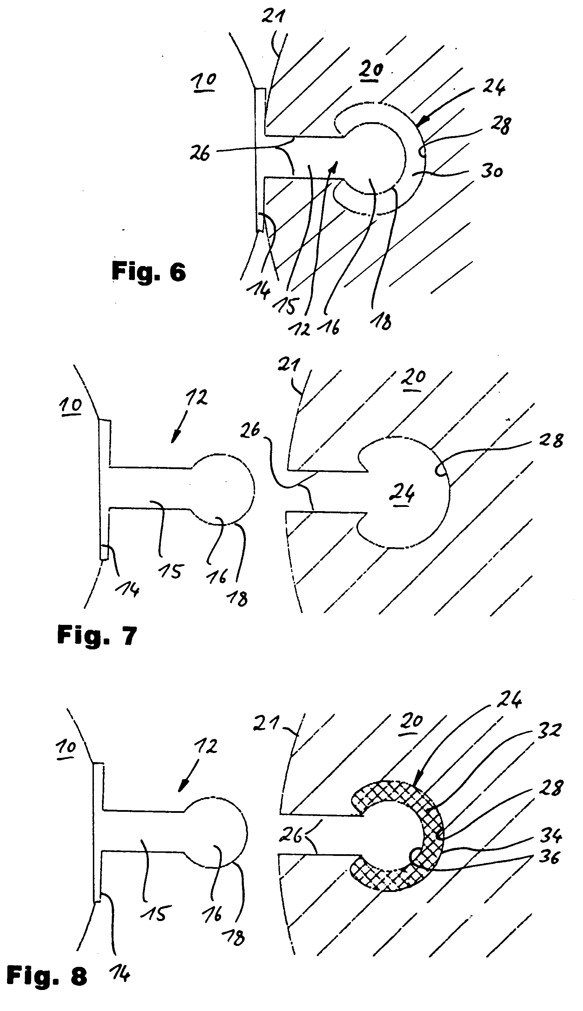

Wie insbesondere die Figuren 6 bis 8 erkennen lassen, ist im Sekundärteil 20 eine Aussparung 24 eingearbeitet, die das andere Verbindungselement des Geschiebes bildet. Die Aussparung 24 weist einen zu der auf das Primärteil 10 gerichteten Seite 21 des Sekundärteils 20 offenen ersten Abschnitt mit zwei parallel verlaufenden Innenwänden 26 und einen sich gegenüber dem ersten Abschnitt erweiternden, innenliegenden zweiten Abschnitt auf, dessen Innenfläche 28 konkav geformt ist und im dargestellten Ausführungsbeispiel im Querschnitt etwa die Form eines 270°-Kreisabschnittes besitzt. Demnach hat die konkave Innenfläche 28 der Aussparung 24 die Form eines Dreiviertelkreis-Zylinders mit parallel zu den Wänden 26 verlaufender Achse. Der von der Innenfläche 28 begrenzte Hohlraum ist so dimensioniert, daß er den teilzylindrischen Abschnitt 16 des am Primärteil 10 sitzenden Stabteils 12 berührungsfrei aufnimmt, indem ein Spalt 30 (vgl. Figuren 5 und 6) zwischen der Außenfläche 18 des teilzylindrischen Abschnittes 16 und der Innenfläche 28 der Aussparung 24 verbleibt. Demgegenüber entspricht der Abstand zwischen den beiden parallelen Innenwänden 26 etwa der Dicke des Steges 15 des Stabteils 12, so daß bei in die Aussparung 24 eingesetztem Stabteil 12 nur ein verhältnismäßig geringes Spiel zwischen dem Steg 15 und den parallelen Innenwänden 26 vorhanden ist.

Das Stabteil 12 und die Aussparung 24 bilden gemeinsam ein Geschiebe zur Verbindung von Primärteil 10 und Sekundärteil 20, wobei die konkave Innenfläche 28 der Aussparung 24 und die konvexe Außenfläche 18 des teilzylindrischen Abschnittes 16 des Stabteils 12 die Führungsflächen des Geschiebes bilden. Allerdings verlaufen die Flächen 18 und 28 in einem definierten Abstand zueinander, so daß, wie bereits zuvor erwähnt wurde, zwischen diesen ein definierter bogenförmiger Spalt 30 gebildet wird, wie insbesondere die Figuren 5 und 6 erkennen lassen.

In diesen gebogenen Spalt 30 wird ein Friktionselement 32 eingepaßt, das in den Abmessungen den Abmessungen des gebogenen Spaltes 30 entspricht, wie Figur 8 gut erkennen läßt, so daß es orts- und drehfest im Spalt 30 sitzt. Das Friktionselement 32 ist im einzelnen in Figur 4 gezeigt. Es hat im wesentlichen die Form einer Schlitzhülse. Mit seiner äußeren konvexen Fläche 34 liegt das Friktionselement 32 an der konkaven Innenfläche 28 der Aussparung 24 an, während die konkave Innenfläche 36 des Friktionselementes 32 an der konvexen Außenfläche 18 des teilzylindrischen Abschnittes 16 des Stabteils 12 anliegt.

Nachfolgend wird die Herstellung des zuvor beschriebenen Ausführungsbeispiels eines Zahnersatzteils erläutert.

Zunächst werden das Primärteil 10 und das Sekundärteil 20 hergestellt, was beispielsweise mittels Fräsen und/oder Funkenerosion erfolgen kann. Mit der Herstellung des Primärteils 10 und des Sekundärteils 20 werden auch gleichzeitig das Stabteil 12 und die Aussparung 24 ausgebildet. Das Stabteil 12 kann aber auch separat hergestellt und dann an das Primärteil 10 anmodelliert oder befestigt werden.

Das Stabteil 12 am Primärteil 10 und die Aussparung 24 im Sekundärteil 20 werden in einem ersten Schritt derart grob vorbearbeitet, daß sie im allgemeinen noch nicht ihre endgültigen Abmessungen gemäß den Darstellungen in den Figuren erhalten, indem während dieses Herstellungsschrittes das Stabteil 12 am Primärteil 10 im allgemeinen ein wenig größer und die Aussparung 24 im Sekundärteil 20 im allgemeinen ein wenig kleiner als im dargestellten Endzustand ausfällt. Dadurch ist es zwar möglich, das so ausgebildete Stabteil 12 in die so ausgebildete Aussparung 24 zu schieben - etwa in ähnlicher Weise, wie in den Figuren 5 und 6 dargestellt ist -, so daß das Primärteil 10 mit dem Sekundärteil 20 verbunden werden kann; jedoch kann dabei das Friktionselement 32 noch nicht in den Spalt 30 eingepaßt werden, da dieser zu jenem Zeitpunkt noch zu klein ist und nicht die gewünschten Dimensionen aufweist.

Durch das Fehlen des Friktionselementes 30 wegen des noch zu kleinen Spaltes 30 weist das so gebildete Geschiebe eine gewisse Toleranz auf, da das Stabteil 12 nur lose in der Aussparung 24 sitzt. Dadurch ist das Stabteil 12 in gewissem Umfang innerhalb der Aussparung 24 verschiebbar, so daß das mit dem Primärteil 10 verbundene Sekundärteil 20 am Primärteil 10 ausgerichtet und in die gewünschte Position justiert werden kann.

Nachdem die Lagejustierung des Sekundärteils 20 am Primärteil 10 durchgeführt worden ist und nun das Sekundärteil 20 lagerichtig am Primärteil 10 angeordnet ist, werden die konvexe Außenfläche 18 des teilzylindrischen Abschnittes 16 des Stabteils 12 und die konkave Innenfläche 28 der Aussparung 24 gemeinsam in einem Arbeitsgang durch Funkenerosion mittels einer in Figur 4 dargestellten Elektrode 50 nachbearbeitet. Wie ein Vergleich der Figuren 3 und 4 erkennen läßt, entspricht die Elektrode 50 in ihren Abmessungen im wesentlichen dem Friktionselement 32, wobei jedoch die Elektrode 50 wegen Berücksichtigung des bei der Funkenerosion entstehenden Funkenspaltes geringfügig kleinere Querschnittsabmessungen aufweisen sollte.

Die Elektrode 50 wird nun in Schieberichtung des Geschiebes in den bereits vorhandenen Spalt 30 zwischen dem Stabteil 12 und der Aussparung 24 mittels Funkenerosion vorgetrieben, wobei mit der Innenfläche 52 der Elektrode 50 (vgl. Figur 4) die konkave Außenfläche 18 des teilzylindrischen Abschnittes 16 des Stabteils 12 am Primärteil 10 (vgl. insbesondere Figur 6) und mit der Außenfläche 54 der Elektrode 50 (vgl. Figur 4) die konkave Innenfläche 28 der Aussparung 24 im Sekundärteil 20 (vgl. insbesondere Figur 6) nachbearbeitet wird. Mit dieser Maßnahme erhalten das Stabteil 12 und die Aussparung 24 ihre endgültige Form und somit ihr endgültiges Finish, so daß die Flächen 18 und 28 nun den gewünschten Verlauf erhalten und im gewünschten, definierten Abstand zueinander angeordnet sind. Dadurch erhält nun auch der bogenförmige Spalt 30 die gewünschten, definierten Abmessungen, die es nun erlauben, das schlitzhülsenförmige Friktionselement 32 in den Zwischenraum 30 in 0° zur Einschubrichtung, d.h. direkt in Einschubrichtung spannungsfrei einzupassen, wie in Figur 8 angedeutet ist. Nach der Funkenerosionsbearbeitung wird die Außenfläche 18 des teilzylindrischen Abschnittes 16 des Stabteils 12 am Primärteil poliert.

Mit dem eingesetzten Friktionselement 32, das aus Kunststoff mit hohem Reibungskoeffizienten hergestellt sein kann, ist das Geschiebe fertiggestellt und ermöglicht nun einen präzisen Paßsitz des Sekundärteils 20 am Primärteil 10, ohne daß später eine Verschlechterung des Paßsitzes zu befürchten ist.

Sofern das so eingesetzte Friktionselement 32 sich nicht vollständig bis zur Oberfläche des Sekundärteils 20 erstreckt, zu der der Spalt 30 offen ist, und somit nicht mit jener Oberfläche abschließt, kann der übriggebliebene Teil des Spaltes 30 mit geeignetem Dichtungsmaterial wie z.B. Kompositmaterial geschlossen werden.

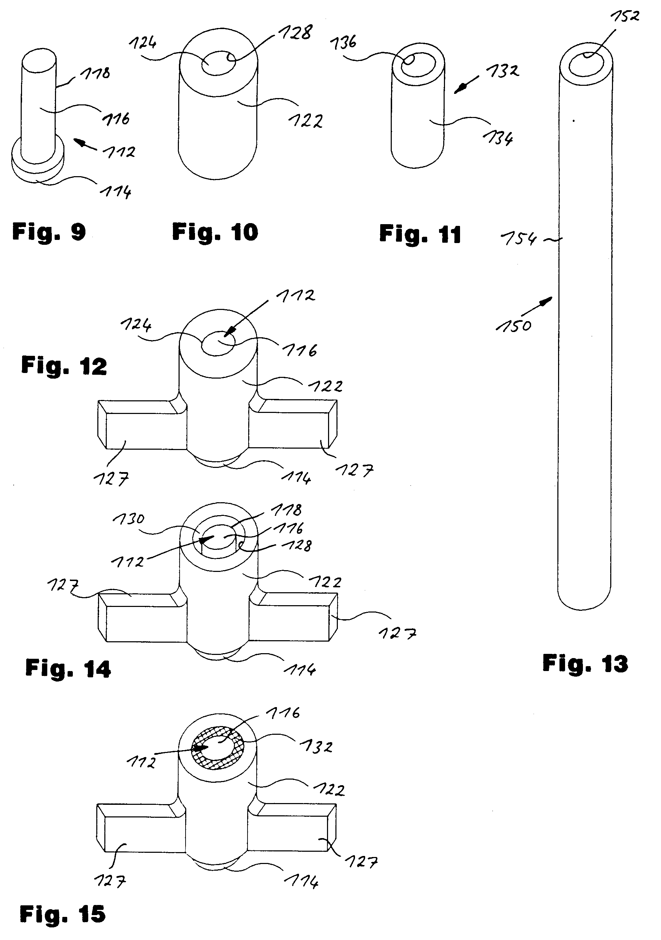

In den Figuren 9 bis 15 ist eine zweite Ausführung eines Geschiebes dargestellt. Diese Ausführung unterscheidet sich von der anhand der Figuren 1 bis 8 beschriebenen ersten Ausführung dadurch, daß anstelle einer direkt in das Sekundärteil 20 eingearbeiteten Aussparung 24 ein separates Rohrstück verwendet wird, das an einem hier nicht dargestellten Sekundärteil befestigt wird.

Das in Figur 9 dargestellte Stabteil 112 dieser Ausführung besitzt einen kreisscheibenförmigen Fuß 114, von dem ein zylindrischer Abschnitt 116 emporragt. Mit dem Fuß 114 wird das Stabteil 112 an ein nicht dargestelltes Primärteil o.dgl. anmodelliert.

Figur 10 zeigt das bereits erwähnte Rohrstück 122, dessen zu beiden Stirnseiten offener Hohlraum 124 zylindrisch geformt ist. Der Durchmesser des Hohlraums 124 ist so dimensioniert, daß der Hohlraum 124 den zylindrischen Abschnitt 116 des Stabteils 112 berührungsfrei aufnehmen kann.

Gemäß den Darstellungen in den Figuren 12, 14 und 15 ist das Rohrstück 124 mit zwei sich radial erstreckenden Verbindungsarmen 127 versehen, die zur Halterung im Sekundärteil oder zur Verbindung zweier Sekundärteile mit einem dazwischen liegenden Primärteil dienen. Vorzugsweise sind die Verbindungsarme 127 am Rohrstück 122 anmodelliert.

Der Stabteil 112 und das Rohrstück 122 bilden nun das Geschiebe zur Verbindung von Primärteil und Sekundärteil, wobei die konvexe Außenfläche 118 des zylindrischen Abschnittes 116 des Stabteils 112 und die konkave Innenfläche 128 des Hohlraums 124 des Rohrstückes 122 die Führungsflächen des Geschiebes bilden. Allerdings verlaufen die Flächen 118 und 128 wie bei der ersten Ausführung in einem definierten Abstand zueinander, so daß zwischen diesen ein definierter Ringspalt 130 entsteht, wie Figur 14 erkennen läßt.

In diesen Ringspalt 130 wird ein Friktionselement 132 eingepaßt, das in den Abmessungen den Abmessungen des Ringspaltes 30 entspricht, wie Figur 15 zu entnehmen ist. Das Friktionselement 132 ist im einzelnen in Figur 11 gezeigt. Es hat im wesentlichen die Form einer zylindrischen Hülse. Mit seiner Außenfläche 134 liegt das Friktionselement 132 an der konkaven Innenfläche 128 des Rohrstückes 122 an, während die Innenfläche 136 des Friktionselementes 132 an der konvexen Außenfläche 118 des Stabteils 112 anliegt.

Nachfolgend wird die Herstellung des zuvor beschriebenen Ausführungsbeispiels eines Geschiebes am Zahnersatzteil erläutert.

Mit der Herstellung der Primär- und Sekundärteile werden auch das Stabteil 112 und das Rohrstück 122 ausgebildet oder angebracht, wobei sie jedoch derart grob vorbearbeitet werden, daß der zylindrische Abschnitt 116 des Stabteils 112 und der Hohlraum 124 des Rohrstückes 122 im allgemeinen noch nicht ihre endgültigen Abmessungen gemäß den Darstellungen in den Figuren erhalten. Während dieses Herstellungsschrittes fällt der zylindrische Abschnitt 116 des Stabteils 112 am Primärteil im allgemeinen ein wenig größer und der Hohlraum 124 des Rohrstückes 122 am Sekundärteil ein weniger kleiner als im dargestellten Endzustand aus. Dadurch ist es wie bei der ersten Ausführung zwar möglich, das Stabteil 112 mit seinem zylindrischen Abschnitt 116 in den Hohlraum 124 des Rohrstückes 122 zu schieben, wie in Figur 14 angedeutet ist, so daß das Primärteil mit dem Sekundärteil verbunden werden kann, jedoch kann dabei das Friktionselement 132 noch nicht zwischen Stabteil 112 und Rohrstück 118 eingepaßt werden, da der Abstand zwischen diesen zu jenem Zeitpunkt noch zu klein ist und nicht die gewünschten Dimensionen aufweist.

Durch das Fehlen des Friktionselementes 132 weist das so gebildete Geschiebe wie bei der ersten Ausführung eine gewisse Toleranz auf, da das Stabteil 112 nur lose im Hohlraum 124 des Rohrstückes 122 sitzt. Dadurch ist das Stabteil 112 in gewissem Umfang innerhalb des Rohrstückes 122 verschiebbar, so daß noch eine gewisse Ausrichtung und Justierung der Verbindung zwischen Primärteil und Sekundärteil möglich ist. Nach Beendigung der Lagejustierung werden die konvexe Außenfläche 118 des zylindrischen Abschnittes 116 des Stabteils 112 und die konkave Fläche 128 des Hohlraums 124 des Rohrstückes 122 gemeinsam in einem Arbeitsgang durch Funkenerosion mittels einer in Figur 13 dargestellten Elektrode 152 nachbearbeitet. Wie ein Vergleich der Figuren 11 und 13 erkennen läßt, entspricht die Elektrode 150 in ihren Abmessungen im wesentlichen dem Friktionselement 132. Demnach hat die Elektrode 150 die gleiche Hülsenform wie das Friktionselement 132. Jedoch sollte die Elektrode 150 wegen Berücksichtigung des bei der Funkenerosion entstehenden Funkenspaltes auch bei dieser Ausführung geringfügig kleiner Querschnittsabmessungen aufweisen.

Die Elektrode 150 wird nun wie bei der ersten Ausführung in Schieberichtung des Geschiebes zwischen Stabteil 112 und Rohrstück 122 getrieben, wobei mit der Innenfläche 152 der hülsenförmigen Elektrode 150 (vgl. Figur 13) die Außenfläche 118 des Stabteils 112 (vgl. Figur 9) und mit der Außenfläche 154 der Elektrode 150 (vgl. Figur 13) die Innenwand 124 des Rohrstückes 122 (vgl. Figur 10) nachbearbeitet wird. Mit dieser Maßnahme erhalten der zylindrische Abschnitt 116 des Stabteils 112 und der Hohlraum 124 des Rohrstückes 122 ihre endgültige Form und somit ihr endgültiges Finish, so daß die Flächen 118 und 128 nun den gewünschten Verlauf und die gewünschte Anordnung erhalten und im gewünschten, definierten Abstand zueinander angeordnet sind. Dadurch erhält nun auch der Ringspalt 130 die gewünschten, definierten Abmessungen, die es erlauben, das Friktionselement 132 in den Ringspalt 130 einzupassen, wie in Figur 15 gezeigt ist. Das bei der zweiten Ausführung verwendete Friktionselement 132 besteht vorzugsweise aus demselben Material wie das Friktionselement 32 der ersten Ausführung.

Ergänzend wäre noch anzumerken, daß bei bestimmten Anwendungsfällen das Sekundärteil auch mit zwei oder mehreren Geschieben am Primärteil befestigt werden kann. In diesem Fall ist darauf zu achten, daß die Geschiebe parallel zueinander ausgerichtet werden, um ein leichtes Fixieren des Sekundärteils am Primärteil zu ermöglichen. Dies ist jedoch mit dem zuvor beschriebenen Verfahren kein Problem, da die Elektroden dann lediglich parallel zueinander geführt zu werden brauchen.

## Patentansprüche

1. Verfahren zur Herstellung von Zahnersatzteilen, wie z.B. Kronen, Brücken, Teil- oder Vollprothesen, mit mindestens einem metallischen Primärteil (10) und einem daran lösbar befestigten, ebenfalls aus Metall gefertigten Sekundärteil (20), wobei Primärteil (10) und Sekundärteil (20) zur Verbindung miteinander ineinander passende Verbindungselemente (12, 24; 112, 122) mindestens eines Geschiebes aufweisen, die in einem definierten Abstand voneinander angeordnet sind, so daß zwischen Führungsflächen (18, 28; 118, 128) der Verbindungselemente (12, 24; 112, 122) ein definierter Zwischenraum (30; 130) gebildet wird, in den ein Friktionselement (32; 132) eingepaßt wird,
dadurch gekennzeichnet, daß bei der Herstellung von Primärteil (10) und Sekundärteil (20) die Verbindungselemente (12, 24; 112, 122) des Geschiebes zunächst derart vorbearbeitet werden, daß ein Zusammensetzen von Primärteil (10) und Sekundärteil (20) im allgemeinen nur ohne Anordnung des Friktionselementes (32; 132) möglich ist, und anschließend bei lagerichtiger Anordnung des Sekundärteils (20) am Primärteil (10) die Führungsflächen (18, 28; 118, 128) der Verbindungselemente (12, 24; 112, 122) zur Ausbildung des definierten Zwischenraumes (30; 130) gemeinsam in einem Arbeitsgang durch Funkenerosion mittels einer Elektrode (50; 150) nachbearbeitet werden, die in ihren Abmessungen im wesentlichen dem Friktionselement (32; 132) entspricht.

2. Verfahren nach Anspruch 1,
dadurch gekennzeichnet, daß die Elektrode (50; 150) in Schieberichtung des Geschiebes zwischen dessen Verbindungselemente (12, 24; 112, 122) getrieben wird.

3. Verfahren nach Anspruch 1 oder 2,
dadurch gekennzeichnet, daß mit einer ersten Fläche (52; 152) der Elektrode (50; 150) die Führungsfläche (18; 118) des einen Verbindungselementes (12; 112) am Primärteil (10) und mit einer zweiten Fläche (54; 154) der Elektrode (50; 150) die Führungsfläche (28; 128) des anderen Verbindungselementes (24; 122) am Sekundärteil (20) gleichzeitig nachbearbeitet wird.

4. Verfahren nach mindestens einem der Ansprüche 1 bis 3, dadurch gekennzeichnet, daß die Führungsfläche (18; 118) des einen Verbindungselementes (12; 112) mit einer konvexen Form und die Führungsfläche (28; 128) des anderen Verbindungselementes (24; 122) mit einer entsprechend konkaven Form ausgebildet wird.

5. Verfahren nach mindestens einem der Ansprüche 1 bis 4, bei welchem zur Ausbildung des Geschiebes eine Aussparung (24; 124) und ein in die Aussparung (24; 124) passender Ansatz (12; 112) vorgesehen wird,
dadurch gekennzeichnet, daß bei lagerichtiger Anordnung des Sekundärteils (20) am Primärteil (10) zwischen die Aussparung (24; 124) und den in dieser sitzenden Ansatz (12; 112) die Elektrode (50; 150) derart getrieben wird, daß mit einer ersten Fläche (52; 152) der Elektrode (50; 150) die Außenfläche (18; 118) des Ansatzes (12; 112) und mit einer zweiten Fläche (54; 154) der Elektrode (50; 150) die Innenfläche (28; 128) der Aussparung (24; 124) nachbearbeitet wird.

6. Verfahren nach Anspruch 5,
dadurch gekennzeichnet, daß der Ansatz (12; 112) einen teil- oder vollzylindrischen Abschnitt (16; 116) aufweist und das Friktionselement (32; 132) als offene oder geschlossene Hülse ausgebildet wird.

7. Verfahren nach Anspruch 6,
dadurch gekennzeichnet, daß der Ansatz (12) als an einem Steg (15) seitlich sitzender Zylinder (16) und das Friktionselement (32) als Schlitzhülse ausgebildet wird.

8. Verfahren nach mindestens einem der Ansprüche 5 bis 7 zur Herstellung von Zahnersatzteilen mit mindestens zwei Geschieben zur Verbindung von Primärteil und Sekundärteil,
dadurch gekennzeichnet, daß die Ansätze und Aussparungen der Geschiebe parallel zueinander verlaufend ausgearbeitet werden.

9. Verfahren nach mindestens einem der Ansprüche 1 bis 8, dadurch gekennzeichnet, daß das Friktionselement (32) aus reibungserhöhendem Kunststoff hergestellt wird.
